# EUROPEAN PATENT SPECIFICATION

(11) **EP 4 298 399 B1**
(45) Date of publication and mention of the grant of the patent: **15.04.2026**
(21) Application number: 22702801.6
(22) Date of filing: 27.01.2022
(51) Int. Cl.: G01C 21/20, G05D 1/00, G01C 21/00, G01C 21/34

(54) **METHOD AND SYSTEM FOR AUTONONOMUS DRIVING OF A MINING MACHINE IN AN UNDERGROUND ENVIRONMENT**
VERFAHREN UND SYSTEM ZUM AUTONOMEN FAHREN EINER ABBAUMASCHINE IN EINER UNTERIRDISCHEN UMGEBUNG
PROCÉDÉ ET SYSTÈME DE CONDUITE AUTONOME D'UNE MACHINE D'EXPLOITATION MINIÈRE DANS UN ENVIRONNEMENT SOUTERRAIN

(30) Priority: 24.02.2021 SE 2150197
(43) Date of publication of application: 03.01.2024
(73) Proprietor: Epiroc Rock Drills Aktiebolag, 701 91 Örebro (SE)
(72) Inventor: GOPALAKRISHNAN, Harikrishnan, 702 22 Örebro (SE)
(74) Representative: Epiroc Rock Drills AB
(86) International application number: PCT/SE2022/050076
(87) International publication number: WO 2022/182275

(56) References cited:
- WO-A1-2010/149852
- WO-A1-2021/012125
- US-A1- 2019 004 524
- RAVANKAR ABHIJEET ET AL: "Path Smoothing Techniques in Robot Navigation: State-of-the-Art, Current and Future Challenges", SENSORS, vol. 18, no. 9, 19 September 2018 (2018-09-19), pages 3170, XP055844804, DOI: 10.3390/s18093170

## Description

### Field of the disclosure

The present disclosure relates to autonomous driving of mining machines, and, more specifically, to a computer-implemented method for routing an underground mining machine in an underground environment. The disclosure also relates to a system that implements the method, as well as an underground mining machine for use in such a system.

### Background of the disclosure

In the fields of mining and tunnelling, for example, there is an ongoing automation process, improving e.g., efficiency, productivity and safety. Examples of changes/improvements that are carried out to an increasing extent is the automation of various processes occurring in mining and tunnelling.

It is, for example, often desirable that at least part of the mining machines that are used in mining/tunnelling can be driven in a fully autonomous mode, i.e., without an operator being required to control the mining machines during all instances of machine operation.

One example of mining machines where automated operation oftentimes is considered to be beneficial are so-called LHD (loading, hauling and dumping) machines. These mining machines represent transport vehicles that may be used to remove broken rock, haul it to a particular place where the broken rock is dumped, and to return to the initial (start) location to pick up a new load. Thus, these vehicles often perform the same travel over and over again, which makes in particular the travel between load and dump locations well suited for automation. There are also various other situations where automation may prove beneficial.

However, in order to allow autonomous driving it must be ensured that the vehicle is aware of its location in the environment in which it is traveling. With regard to surface navigation, global navigation satellite systems, such as GPS, exist and may be utilised to substantially facilitate accurate positioning of a vehicle in relation to its surroundings.

An example of autonomous vehicle navigation benefitting from such positioning is disclosed in US2019/004524 A1.

With regard to underground operation, however, global navigation satellite systems are inaccessible, and no global navigation system is available for use. Instead local navigation solutions are utilized.

Examples of such local navigation solutions include sensor and odometry based navigation, e.g., as disclosed in WO2021/012125 A1.

Autonomous operation underground requires a representation of the surroundings, such as a map representation, that the vehicle can use for positioning and thereby be able to navigate from one location to another. Navigation rely highly on the representation of the environment of the vehicle.

A common type of existing solution to achieve autonomous operation is based on a principle, where the vehicle in a path recording step is first driven manually along a route, i.e., along the tunnels and/or drifts, along which the vehicle will later be driven autonomously. During the path recording step, the vehicle is manually driven (by an operator present in an operator cabin of the vehicle or by remote-control from a remote control station) from a position at which autonomous driving is to commence to a target position, while at the same time signals from various transmitters arranged on the vehicle are recorded. In particular, manoeuvrings of the vehicle under the influence of the driver are recorded so that these manoeuvrings can be "played back" during subsequent autonomous driving. In addition to recording the manoeuvrings that the vehicle undergo, the direction and distance to obstacles in the surroundings, in general comprising at least rock walls, are determined. Distances and directions in relation to the vehicle may be measured continuously, e.g. using laser range scanners, and the measurements may be stored in various directions from one or more sensors located on the vehicle. Measurements are stored for various vehicle positions along the path.

Following the recording of the path, one or more local map representations covering the region in which the vehicle will be moving may be generated, and the path as recorded is translated to coordinates in the one or more local maps. A single route may consist of a number of consecutive map representations, each covering a part of the route.

The map representations of the surroundings of the vehicle while travelling the path can then be created with the aid of the transmitter information for the tunnels/drifts along which the vehicle is moving, where the map representation may form a local co-ordinate system and the path driven by the vehicle during the recording is described in this system of co-ordinates, possibly along with information on, for example, a suitable or maximum speed to be used for various parts of the path.

The recorded path may then be played back by the vehicle, wherein co-ordinate information as to how the vehicle was moved manually and the representation of the surroundings is used to move the vehicle autonomously along the same path that the vehicle travelled during the recording.

The vehicle follow the path recorded by the driver while simultaneously determining its position in the map that was also generated while recording the path, where the vehicle may calculate its position in the map by measuring the distances to the surrounding rock also during autonomous traveling to thereby position itself in the map representation and perform corrections in regard of deviations between the actual vehicle position and the expected position according to the current position along the recorded path. WO2010/0149852 A1 discloses an example solution wherein an environment model and a route is taught in run-time while driving the vehicle by manual control along a required route.

The generation of a path for autonomous traveling of this kind, however, face drawbacks. For example, the driver may undertake various steering corrections (i.e. taking corrective measurements to the left or right) when recording the path. These corrections, depending on the driving skills of the driver, will then be reproduced each time the vehicle is driven along the recorded route. This may give rise to potential associated wear over time. Furthermore, the routing is associated with each specific vehicle and respective path recording. This is especially limiting when there is a need to route mining machines, e.g., mining vehicles comprising one or more mining work devices.

### Summary of the disclosure

An object of the disclosure is to provide a method and system that improves routing of a mining machine during autonomous driving from a first location to a second location.

This and other objects are achieved by means of a computer implemented method, a computer program, a computer-readable medium, a system and an underground mining machine as defined in the appended claims.

According to a first aspect of the present disclosure, it is provided a computer-implemented method for routing of an underground mining machine in an underground environment, where the machine is configured to be driven from a first location to a second location in the underground environment. Measured distances to surrounding obstacles are obtained from a plurality of positions along a route from a first location to a second location, and a representation of a navigable area along the route from the first location to the second location is determined. The navigable area is a tolerance area along the route from the first location (A) to the second location (B).

A navigable machine path from the first location to the second location is generated, the navigable machine path being constrained to the navigable area and being generated by a curvature reducing algorithm, and the machine is routed in accordance with the navigable machine path during autonomous driving from the first location to the second location.

The generated navigable machine path may be stored in storage means of a control system of the underground mining machine.

In the context of the present disclosure, the mining machines is a loader, hauler, dumper, or other type of mining vehicle that may comprise one or more mining work devices, e.g., carried on a boom and/or feed beam of the mining machine.

The representation of the navigable area may generated by establishing a plurality of positions and obtaining measured distances to surrounding obstacles at each of the established plurality of positions. The navigable area may then be based on the obtained measured distances to surrounding obstacles for the established plurality of positions. The measured distances hence define a clearance area that is used to define a constraint to which the navigable path is confined during autonomous driving from the first location to the second location.

According to the present disclosure it is provided a method and system that generates a path to be followed during autonomous driving of an underground mining machine that is independent, and thereby free, from undesired driver generated steering corrections along the route from the first location to the second location.

When a navigable area has been determined, this is used to generate a navigable machine path from the first location to the second location. In this way a navigable machine path can be generated that utilises the available space established by the navigable area to determine a machine path that can be made as straight as possible given the constraints by the navigable area. In this way unnecessary steering motions may be avoided, and in particular the generated navigable machine path is independently generated, i.e., independent of a path taken by a driver. Furthermore, the navigable machine path is generated by a curvature reducing algorithm so that a smooth path without sudden and excessive turning motions is obtained. This may substantially reduce wear of the machine, and may also allow use of higher machine speeds when autonomously driving the navigable machine path in comparison to a situation where the autonomous path represents an adaptation of an operator driven path. Following generation, the machine can be routed by the machine control system in accordance with the navigable machine path during autonomous driving from the first location to the second location. The generated navigable machine path may be stored in a control system of the underground mining machine.

Distances may be recorded in a plurality of directions in relation e.g., to a longitudinal axis of the machine for each of the plurality of positions to ensure that obstacles such as rock walls in the surroundings of the machine are properly detected and accounted for. In general with regard to the determining of the representation of the navigable area, measurements at an angle with respect to the longitudinal axis, and in particular along directions being closer to the transversal axis than the longitudinal axis of the machine will be the measurements determining the navigable area of the machine. Tunnels are oftentimes narrow and long, with the result that unless the tunnel is turning longitudinal measurements typically end up being limited by the range of sensors.

According to some examples of the disclosure, determining of the representation of the navigable area may be achieved by driving the machine from the first location to the second location while simultaneously recording the distances to surrounding obstacles from the plurality of positions along the route. This provides a solution that automatically takes into account e.g., machine positioning when determining distances to surrounding obstacles to ensure that the navigable area is also drivable by the machine.

The representation of the navigable area may further be determined as a representation of an area within which the machine maintains a predetermined safety distance to surrounding obstacles along said route. Hence the navigable area may be reduced in relation the actually available area as determined by the distance measurements. The predetermined safety distance may be any suitable distance, and e.g., be arranged to be machine dependent, where larger safety distances may be utilised for larger machines, and vice versa. The safety distance may, for example, be any suitable distance in the interval 0.1-2 meters. It is also contemplated that e.g. different safety distances are utilised for the different sides of the machine so that the machine in general will travels more towards one side of a tunnel than the other.

According to some examples of the disclosure machine information, such as a length and a width of the machine, is utilised, and the navigable area is further defined such that when a predetermined position on a longitudinal axis of the machine, e.g., the centre of a front wheel shaft, of the machine is confined to said navigable area during autonomous driving. The machine may thereby stay clear of the obstacles when being autonomously driven from the first location to the second location. That is, the width and possibly machine information in the form of other dimensions of the machine such as overhang (the length that the machine extends in front or rear of a front or rear wheel shaft) are taken into account when calculating the available navigable area from the distance measurements. This has, inter alia the advantage that the machine can be represented by a single position, and the navigable path can be represented by interconnectable, consecutive points since dimensions are already accounted for. This may facilitate e.g., calculations of the second navigable machine path.

In case the machine information reveals that the machine is an articulated machine comprising a front portion and a rear portion, a point on the front portion as well as a point on the rear portion may be utilised when determining the representation of the navigable area such that the navigable area is defined as the area that is traversable by both said points while fulfilling set conditions.

With further regard to articulated machines, a condition regarding the curvature of the second navigable machine path may be such that that a maximum articulation angle is not exceeded, where appropriate machine dimensions and parameters may be utilised by the curvature reducing algorithm to ensure that such conditions are fulfilled. Furthermore, path curvature of the overall path between the first location and the second location may be arranged to be minimised by the curvature reducing algorithm. The curvature of the overall path will be the sum of all individual curvature elements, and by minimising the total curvature a path is obtained that as much as possible reduces unnecessary wear of the machine while simultaneously, e.g., higher machine speeds may be allowed.

The generation of the navigable path using the curvature reducing algorithm comprises calculating the shortest path from the first location to the second location as constrained by the navigable area, where the shortest path can be calculated as a plurality of interconnectable, consecutive path points. The path points may be determined by obstacles, and in addition further path points may be added along straight line segments of the shortest path, e.g., with a spacing according to the path point spacing of the plurality of positions along a travelled machine path. The curvature is then reduced along this calculated shortest path by recalculating the path points, where the curvature can be reduced to the extent that predetermined conditions regarding overall curvature are fulfilled. The curvature reducing algorithm may also take into account limitations regarding changes in curvature between adjacent path points.

Furthermore, the curvature reducing algorithm is arranged to successively reduce curvature of adjacent path points of the plurality of consecutive path points by recalculating the path points, where curvature is reduced by moving the position of one or more of the path points of the overall path, the movement being constrained by the navigable area. In case the boundary of the navigable area prohibits movement of a particular path points, adjacent path points may be moved instead to thereby reduce curvature.

The curvature reducing algorithm may be designed to be applied a plurality of times, i.e., following a first curvature reduction the resulting path may iteratively be subjected to curvature reduction until one or more conditions regarding the curvature reduction are fulfilled and the curvature reduction is determined to be completed. The algorithm may be designed to perform only small changes of the position of a particular path point for a particular iteration of the curvature reducing algorithm.

Furthermore, since the representation of the navigable area may be determined using measurements at particular positions along the route, and path points may be determined at corresponding inter path point distances, movement of the position of a path point in a direction towards a neighbouring path point may be prevented, or only a limited movement in a direction towards a neighbouring path point may be allowed, such that inter path point distances are substantially maintained along the navigable machine path.

According to some examples of the disclosure, the navigable machine path, prior to being used in autonomous driving, may be subjected to interpolation to form an interpolated path, and new path points be selected at equal inter-path point distances along the interpolated path to thereby form a navigable machine path comprising evenly distributed path points.

According to some examples of the disclosure, user-initiated changes of the navigable area may be carried out. The representation of the navigable area may be displayed, e.g. on a display, to a user of the system. The second navigable machine path may also be displayed.

The navigable area may be changed e.g., by boundaries of the representation of the navigable area being movable by the user such that the navigable area is reduced. This may be performed e.g., if a larger safety distance is desired at one or more locations along the path. The second navigable path may then be automatically recalculated, where such recalculation may be performed as soon as the user performs a change of the navigable area, i.e., a change of the representation of the navigable area. In this way there will always be an optimal smooth machine path that comply also with the changed boundaries of the navigable area.

User-initiated changes of the navigable area may be restricted to changes that reduces the navigable area in relation to an initial navigable area, e.g., as determined from a plurality of positions along a travelled machine path. In this way it can be ensured that safety distance requirements to surrounding obstacles along the route are not violated. Still, reductions of the navigable area may later be removed again but only to the extent that the initial boundaries are not violated, and the navigable machine path may as a consequence be recalculated again.

The distances to surrounding obstacles can be measured by means of at least one sensor arranged on the mining machine or other vehicle configured to travel the machine path. The sensor may, for example, comprise one or more laser range scanners arranged to measure the distance to surrounding obstacles in a plurality of directions in relation to a reference on the mining machine, such as a longitudinal or transversal axis of the mining machine.

It will be appreciated that the examples described in relation to the method aspect of the present disclosure are all applicable also for the system aspect of the present disclosure. That is, the system may be configured to perform the method as defined in any of the above described examples. Further, the method may implemented at least partly in a location remote from the machine or in one or more control units of a machine.

According to a second aspect of the present disclosure, it is provided a computer program comprising instructions which, when the program is executed by a computer, cause the computer to carry out the method according to the first aspect.

According to a third aspect of the present disclosure, it is provided a computer-readable medium comprising instructions which, when executed by a computer, cause the computer to carry out the method according the first aspect.

According to a fourth aspect of the present disclosure, it is provided a system for routing of an underground mining machine from a first location to a second location in an underground environment; the system comprising processing circuitry configured perform the method according to the first aspect.

Further characteristics of the present disclosure and advantages thereof are indicated in the detailed description of exemplary embodiments set out below and the attached drawings.

### Brief description of the drawings

Figs. 1A-B illustrates an exemplary underground mining machine with which embodiments of the disclosure may be utilised;
Fig. 2 illustrates an exemplary schematic overview of an underground environment that the machine of Figs. 1A-B is configured to autonomously navigate;
Fig. 3 illustrates an exemplary method according to embodiments of the disclosure;
Fig. 4 illustrates a navigable area generated from a recorded path according to embodiments of the disclosure;
Fig. 5 illustrates a method for generating a navigable path utilising a determined navigable area;
Figs. 6-9 illustrates path generation according to steps of the method according to Fig. 5.

### Detailed description

Embodiments of the present disclosure will be exemplified in the following in view of a particular kind of underground mining machine. The disclosure is, however, applicable to any machine that is designed to autonomously navigate within an underground environment.

According to the present disclosure, the term route is utilised to denote a general passageway from a first location to a second location, such as the tunnels etc., which a machine travels through along the way from the first location to the second location.

With regard to the term path this is used to denote a representation of the actual positions that the machine passes over along the route from the first location to the second location, where hence the machine may travel various different paths along the same route.

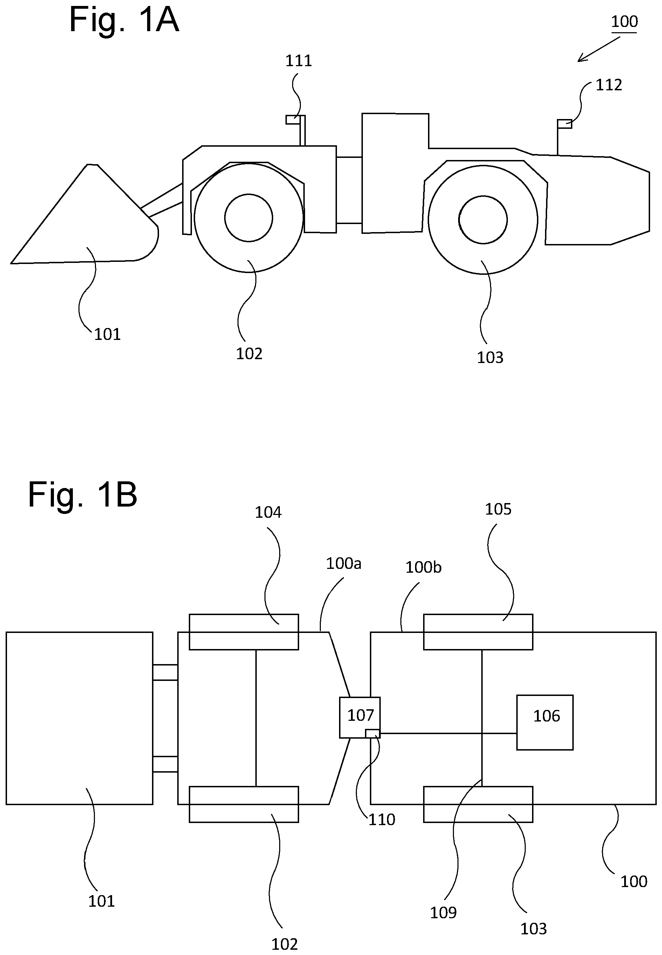

Figures 1A and 1B illustrates a side view and elevated view, respectively, of an exemplary underground mining machine 100 which may be used in a system utilizing embodiments of the disclosure. According to the present example, the machine100 is a load-haul-dump (LHD) machine, but could be any other suitable machine, e.g., a loader or a dump truck, and is used to load and transport away materials such as excavated rock through the use of a bucket 101. The machine 100 comprises, apart from the bucket 101, wheels 102-105 and a control system comprising at least one control unit 106. The control unit is configured to control various functions of the machine 100. Machines of the disclosed kind may comprise more than one control unit, where each control unit may be arranged to be responsible for respective different functions of the machine 100. For example, a control unit may be configured to control various actuators/motors/pumps etc. for manoeuvring the mining machine 100 and bucket 101. Furthermore, according to the present example the mining machine 100 also comprises means, such as a path follower, that is arranged to autonomously follow a path comprising a plurality of path points to be traversed. The path follower may be at least partly integrated in the control unit 106.

The mining machine 100 is an articulated machine, where a front portion 100a is connected to a rear portion 100b by means of a hinge 107, and the machine is steered by means of articulated steering to facilitate manoeuvring of the machine 100. Machines of the disclosed kind are often driven in surroundings where the distance to surrounding rock walls may be small, which may render manoeuvring of a non-articulated machine with conventional front and/or rear wheel steering difficult to carry out. A sensor 110 provides a representation of the current hinge angle to the control unit 106 for use e.g. in the autonomous navigation. As is appreciated by the person skilled in the art, the illustrated machine 100 merely forms an example of usability of embodiments of the disclosure, and, in principle, the present disclosure is applicable for essentially any kind of mining and/or construction machine designed to operate autonomously in an underground environment.

The illustrated machine 100 further comprises front 111 and possibly, but not necessarily, rear 112 range detectors, such as laser range scanners, to determine distances e.g. to surrounding rock and/or other types of obstacles along the travelled route of the machine, and which are connected to the control unit 106 and where the measured distances are utilised in the navigation of the machine, and where the measured distances may also be utilised to generate a map representation of the surroundings of the mining machine 100.

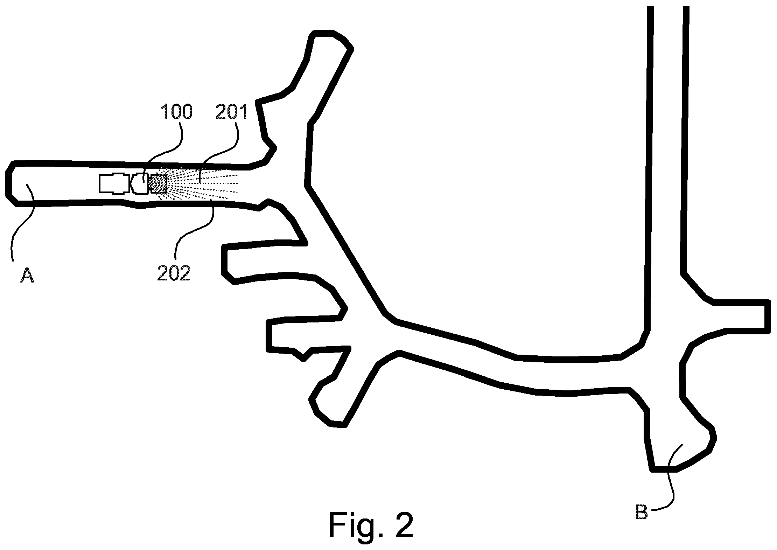

The range detectors 111 (112) measure the distance to the closest object in the forward longitudinal direction of the front section 100a (or the backward longitudinal direction of the rear section 100b and the distance to the closest object (such as surrounding rock walls) in various directions in relation to the longitudinal direction. For example, measurements may be performed for each whole degree ± 90° from the respective longitudinal direction. This is schematically illustrated by dashed lines 201 in Fig. 2, where the surrounding obstacles, i.e., surrounding rock according to the present example, is denoted by 202. Range detectors, e.g., laser range scanners, which measure distance in significantly more directions may alternatively be utilised, as well as those which measure distance in significantly fewer directions. It is also contemplated to use an omnidirectional 360° laser scanner. Furthermore, according to the present example, a range detector is utilised which measure distances in only one plane (such as the horizontal plane of the machine). It is to be noted that range scanning may occur in more than one plane. For example, 3D scanners may be utilised. With regard to the rear range detector 112 this may optionally be utilised, e.g., in case the autonomous driving comprises driving also in the reverse direction.

The distance scanning using the range detectors, e.g., laser range scanner(s), may be arranged to be performed continuously or every 10-200 ms, more often, or more seldom. The control unit 106 utilises these signals when following a stored path to ensure that the actual machine position corresponds to the expected machine position. The distance measurements may also be utilised by a computer at a remote location e.g., when generating a path to be followed according to the disclosure as will be described below.

The machine 100 may also comprise sensor means for detecting travelled distance by the machine. Such sensor means may comprise, for example, at least one wheel rotation sensor, such as an odometer, which can be arranged on an axle emerging from the transmission and deliver signals representing the rotation of at least one of the wheels 102-105 and/or travelled distance. A further example is to use a sensor arranged on a drive shaft of the machine, the sensor delivering signals representing the rotation of the drive shaft and thereby the drive wheel.

Fig. 2 illustrates an exemplary underground environment where the present disclosure may be utilised. According to the illustrated example, the machine 100 uses the bucket 101 (shown in Figs. 1A-B) to load broken rock at a first location A and then hauls the load for dumping at a second location B. The machine 100 is configured to be set up for autonomous navigation (driving) between locations A and B.

It is to be noted that the first location and second location, as utilised in the present disclosure, may represent the full distance from one location to another, such as from a loading site to a dumping site. The route may also include the return trip, and hence encompass the roundtrip from the load location, to dump location, and back again. It is also contemplated that the trip from e.g. location A to B in Fig. 2 may be divided into various segments, where hence the first location and second location according to the present disclosure may represent the navigation of one of a plurality of such consecutive segments, where the navigation of new segment may commence immediately upon the completion of a previous segment. Each segment is then treated according to the present disclosure.

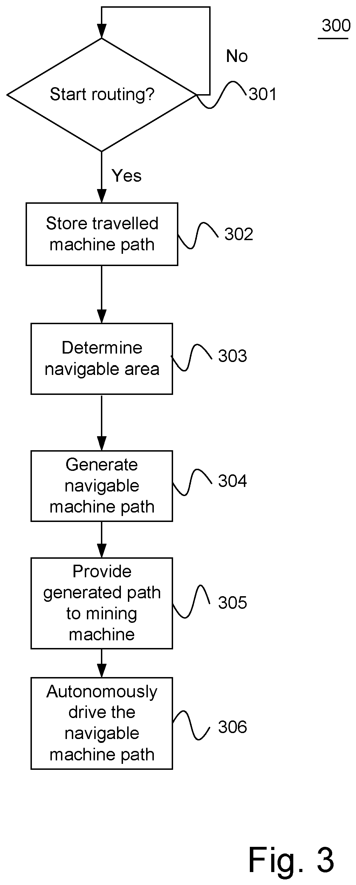

An exemplary method for routing, i.e., generating a path to be followed, an underground mining machine in an underground environment is schematically illustrated in Fig. 3. The method is computer-implemented and may be carried out in the machine 100 or at least partly at a location remote from the machine. The path to be followed may be generated at the remote location and, following generation, be provided to and/or stored in the machine. The path may be downloaded over a wired or wireless network, to the control system of the machine, such as control unit 106, to allow autonomous navigation according to the generated path to be carried out.

The method starts in step 301, where it is determined whether routing according to the disclosure is to be carried out, and when this is the case the method continues to step 302. The method according to the disclosure may be arranged to be carried out when there is a change in a route that that a machine is to drive autonomously, e.g., caused by changes in the surroundings of the machine when navigating from the first location to the second location. The method may also be arranged to be carried when a new route is to be autonomously driven, e.g., between two locations between which autonomous operation has not previously been carried out. The method may also be utilised in case the first or the second location is moved to a new location.

In step 302 a travelled machine path along the route from location A to location B is stored. As was discussed above, global navigation satellite systems are inaccessible in underground environments and local navigation solutions are used instead. Such solutions may encompass a solution where a machine is driven along the route that subsequently is to be autonomously navigated by the machine, where machine settings, such as steering (hinge) angle, machine speed, etc. are frequently recorded for a plurality of machine positions (path points) along the route. The recorded path that the machine has undertaken may then be replicated by the machine control system to autonomously drive the machine according to the recorded path.

It is in the general case not sufficient to only replicate a path to ensure that the machine actually travels from the intended start position to the intended end position. This is, inter alia, due to uncertainties/tolerances in the sensor signals that were recorded during the path recording phase. For example, sensor resolution may not be sufficient to precisely determine the actual machine state at the particular moment in time for which sensor signals are recorded. Also, the surface upon which the machine is travelling may change in time, e.g., by tracks forming from being subjected to the load that the machine imposes. In sum, this will give rise to deviations in actual machine position in relation to the expected machine position.

For this reason, a representation of the surroundings, such as route maps, may be utilised. Distances to surrounding obstacles as measured during the autonomous driving may be compared with expected distances according to the representation of the surroundings, to thereby detect deviations in relation to the expected position such that corrective measures can be taken to ensure that the intended path is followed.

The representation of the surroundings can be defined in a local system of co-ordinates and be local for the specific route to be autonomously driven. The representation of the surroundings can be generated using the sensor signals that was recorded during initial driving of the route when generating the first navigable machine path. Thus, the system of co-ordinates need only include the area where the machine will be moving, i.e., the navigable area, and it can have its origin at any suitable location, such as at the point on the machine which constitutes the reference for the positioning when the recording is begun, such as the middle of the machine's front axle.

The recorded driven path may be translated into instructions as to how the machine should be moved and at what speed the mining machine should be moved on different parts of the route. The path can be determined as path points, i.e., specific points along the route that the mining machine is to traverse, where the path points may be located e.g., 0.5 meters apart, or at any other suitable distance from each other. The data stored for the path is for example the position, the machine direction, desired speed and hinge angle according to the present example. The path hence consists of a number of path points, indicating for each point where the mining machine is supposed to be in relation to the surroundings and also the intended direction of the mining machine in relation to the surroundings. Obtained distances to obstacles are then used as the representation of the surroundings of the machine and actual distances during travel with the machine can be compared to the obtained distances to position the machine and perform corrections if needed.

According to the present disclosure, instead of utilising a travelled machine path to be followed during autonomous driving as in prior art solutions, the travelled machine path may instead, as described below, be utilised to obtain measured distances to surrounding obstacles from a plurality of positions along the route from location A to location B.

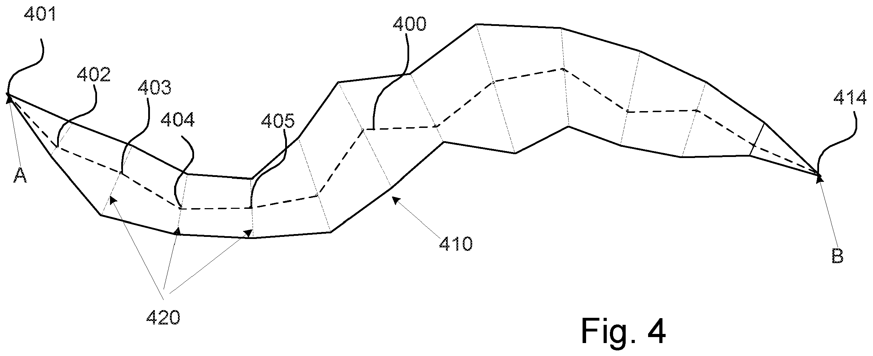

Thus, by driving the machine along the route from location A to B distances to surrounding obstacles may be measured and stored with associations to respective positions along the route. Such measured distances to surrounding obstacles may also have been obtained beforehand using measurements from a machine that previously has been driven the route from location A to B while recording the path data. An exemplary machine path 400 travelled to obtain measured distances to surrounding obstacles is illustrated in Fig. 4 as a series of interconnectable, consecutive path points, of which 401-404, 414 are explicitly denoted. For reasons of simplicity, Fig. 4 shows an exemplary route, and thereby a path and path points that differs from the path between A and B in Fig. 2.

Following the obtaining of the measured distances to surrounding obstacles, e.g., while travelling along a machine path from the first location A to the second location B, a first navigable machine path may be stored in step 302. A representation of a navigable area 410 along the route from location A to location B is determined in step 303 using the obtained distances. The navigable area may be determined as a representation of the surroundings, e.g., in a local positioning system of the underground environment. This is also illustrated in Fig. 4. The navigable area along the route from A to B is defined as an area being such that for as long as the path points are located within the navigable area, the machine stays clear of surrounding obstacles such as surrounding rock along the route. The navigable area may be determined using distances that has been measured for the stored path points of the first navigable machine path, and hence distances from the machine are utilised for discrete positions along the route, e.g. 0.5 meters or any other suitable distance between path points and/or distance measurements.

This may provide a result of the kind as illustrated in Fig. 4, where the navigable area 410 is illustrated as a polygonal shape. It is to be understood that any other shape is possible. The polygonal shape is used herein to facilitate computation. The navigable area 410 is hence defined as a free space surrounding path points, e.g., as measured by distance measurements performed at the particular path points when initially driving the machine from A to B.

The navigable area 410 is hence computed as a tolerance area within which the machine can be repositioned within the surroundings, while still respecting set safety requirements e.g., with regard to tunnel walls. As will be described below, the navigable area may be further restricted by exclusion zones specified by the operator, if such requirement exists.

The generation of the navigable area 410 may take the geometric properties of the machine into account when determining the representation of the navigable area. The geometric properties may include e.g., the length and width of the machine, which may be stored in the system. Further data may also be utilised, such as machine heading and hinge angle, if any.

It is in general the case that the navigable area 410 will depend on machine position within the tunnel, and it is required, for example, that measurements are available for the complete route that the path is to be calculated for. The machine also needs to have an intended travel direction. This may be fulfilled by obtaining the measured distances to surrounding obstacles while travelling the machinea along the route from A to B.

The distances to the surrounding obstacles, e.g., to the surrounding rock are determined at respective positions along the route, e.g., by recording the distances at the path points. The distances are then used to determine a navigable area within which it is safe to travel. It is in general the case that a safety distance is desirable, i.e., that the navigable area is not defined as the area where the machine precisely touches the rock at the borders of the navigable area. The navigable area may therefore be adapted to take e.g., a predetermined safety distance into account to make sure that for as long as the machine is navigated within the navigable area, the machine stays clear of the surrounding obstacles by the safety distance. The safety distance may be adjustable by an operator, where the adjustment may be restricted to only allow an increase of the safety distance in relation to a predetermined minimum value. The predetermined minimum safety distance may be a distance in the interval 0.1-1 meters or any other suitable distance, and e.g., be dependent on the size of the machine.

As is illustrated in the figure, the navigable area 410, in addition to consisting of a shaped area, e.g., a closed polygon, may further comprise a set of tolerance lines, jointly denoted by 420, that are angled 45-135 degrees, e.g., being perpendicular in relation to the machine position for each path point. These tolerance lines may be used to form allowable positions of path points when being moved according to the below. This restriction may be utilised to ensure that the distance measurements being used to generate the navigable area will still be valid, since the measurements in some examples reflect measurements made at the path points along a travelled machine path.

Furthermore, according to embodiments of the disclosure, in order to further facilitate calculations, the navigable area 410 may be calculated with reference to a predetermined position on a longitudinal axis of a specific machine, such as the centre point of a front wheel axle of the machine. The navigable area may then be defined as the area for which, when this point of the machine is within the said area, the machine stays clear of the obstacles when being driven from the first location to the second location, while also fulfilling safety distances if any. Such a definition may facilitate calculations of the path according to the disclosure since this allows the path to consist of interconnectable, consecutive dots.

Following the determining of the representation of the navigable area, a navigable machine path from the first location to the second location is generated in step 304, where the navigable machine path is constrained to be completely within the navigable area. The navigable machine path is generated by a curvature reducing algorithm. There exist various curvature reducing algorithms that may be utilised in this regard, and the following is merely an exemplary algorithm that may be utilised. In particular, the navigable machine path is generated such that the curvature of the path is minimized. The navigable machine path is, generated independently from travelled path points used to obtain the measured distances. The travelled machine path and corresponding path points are only utilised to determine the navigable area to which autonomous navigation, and hence the navigable machine path is confined.

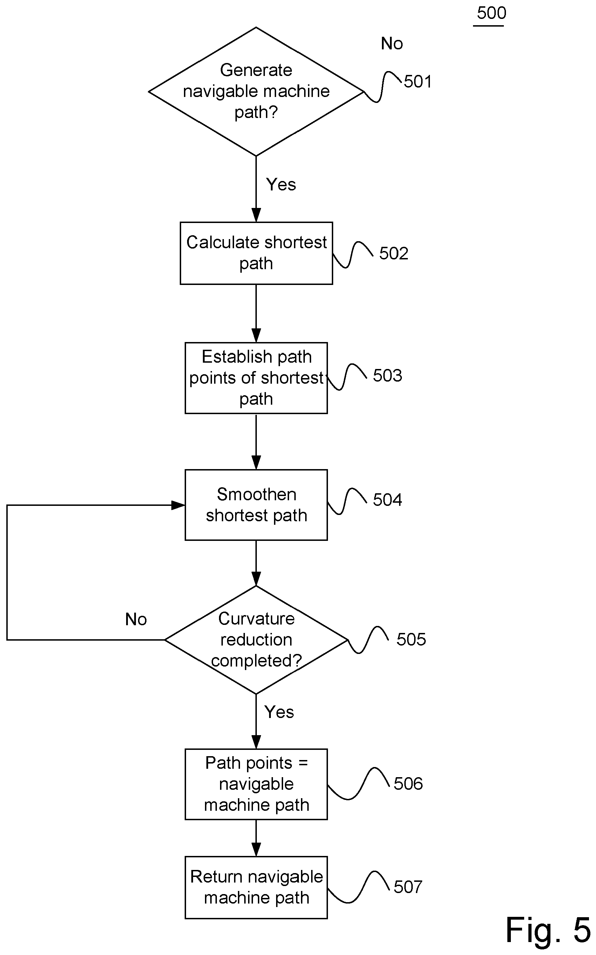

An exemplary method of generating the navigable machine path utilising a curvature reducing algorithm is illustrated in Fig. 5. The method commences in step 501 where it is determined whether the navigable machine path is to be generated. The generation then commences in step 502 by computing the shortest path within the navigable area that still fulfils the restrictions put forward by the navigable area.

This shortest path may be calculated in various ways, and e.g., by a geometric operation where, starting from one end of the route to be navigated, a straight line is incrementally extended until a farthest point where it reaches a border of the navigable area is located. This point is marked, and a new line segment is started and incremented until again the border is reached. This is repeated until the other end of the path has been reached. This may have to be performed for various starting directions in order to calculate the shortest route.

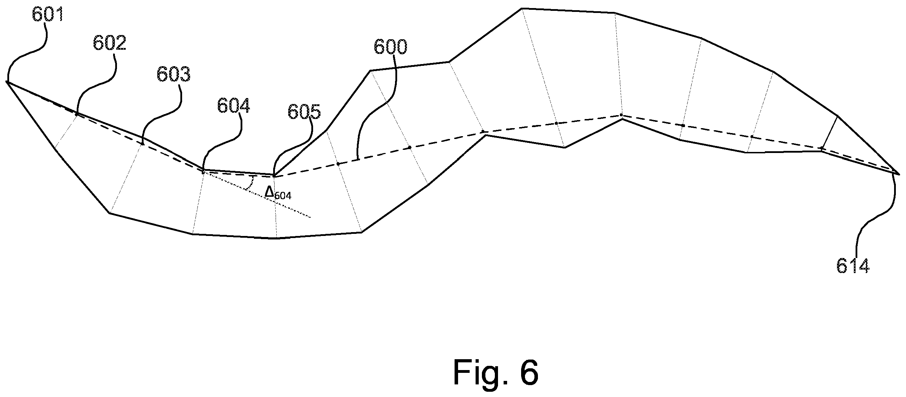

The generated shortest path, denoted 600 in Fig. 6, is then intersected with the existing tolerance-lines that were formed using, e.g., a first travelled machine path to establish new path points, of which 601-605, 614 are explicitly denoted, of the shortest path along the route from A to B.

Although this shortest path 600 may provide a considerably straighter path than the machine path 400 travelled during the obtaining of measured distances, this path may still comprise sharp turns etc. that may not be possible to drive, e.g., because instant turning of the machine to the extent defined by the shortest path may not be possible in reality.

**In** step 504, the calculated shortest path is therefore smoothened, faired, by reducing curvature of the shortest path. Curvature can be defined as the change in direction that occurs between line segments connecting consecutive path points. For example, in Fig. 6 curvature is high at path points 604, 605, while being essentially zero e.g. at path points 602, 603.

In step 504 such differences are reduced by moving one or more of the path points 601, 602, ... in a direction e.g. being more or less perpendicular to the general direction of the path at the particular path point, such as along the tolerance lines.

According to the present example, this is performed in an iterative process, where, for each iteration a local curvature is successively calculated for path points, where one or more points before and after the current point are considered.

Depending on the calculated curvature and space available for moving the path point, the curvature of a path point may be adjusted either by moving the particular path point for which curvature is reduced, or, if the point would have to be moved outside of the navigable are to reduce the curvature, instead of moving the point, curvature has to be reduced by moving its neighbouring points instead.

According to embodiments of the disclosure, the curvature reducing process may be designed to move a path point by only a limited amount, e.g., in terms of the actual position. Instead, a relatively large number of iterations may be utilised instead.

Furthermore according to embodiments of the disclosure, the path points may be restricted to only be moved along the corresponding tolerance-line during the curvature reduction, e.g., to ensure that a suitable distance between consecutive path points is maintained also for the curvature reduced path.

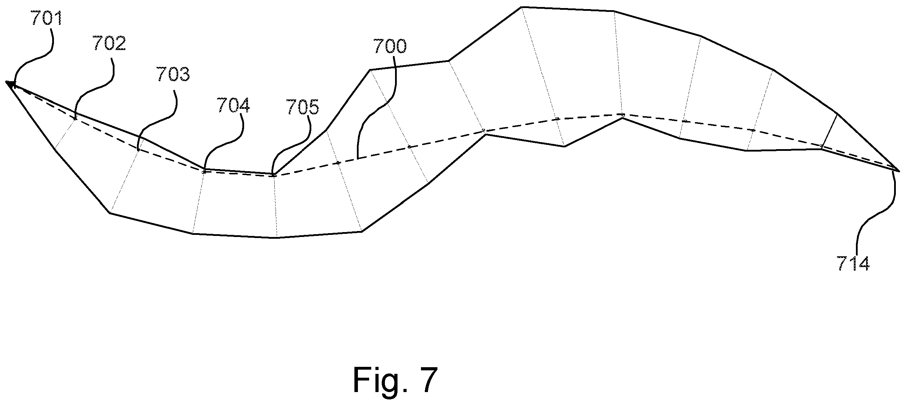

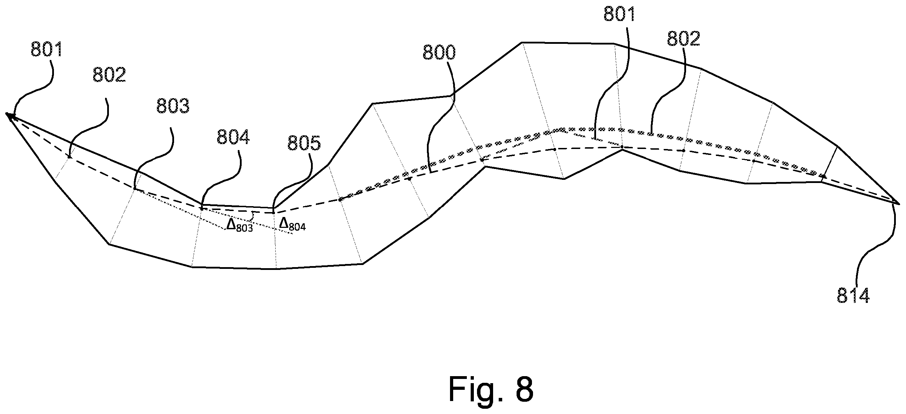

The curvature reducing process may be iterated for as long as the overall curvature is continuously being reduced, and/or be configured to be finished when one or more predefined conditions has been fulfilled. Such conditions may, for example, comprise a predetermined minimum curvature variation along the path, conditions regarding hinge angle constraints, etc., being satisfied. According to embodiments of the disclosure, the iteration is configured to be performed a predetermined number of iterations after which the curvature reduction is ended. Fig. 7 illustrates the curvature reduced path 700 following one iteration, where the overall curvature, when all path points of the path is taken into account, is less than in Fig. 6, and Fig. 8 illustrates the final path 800 following completion of the curvature reduction. For example, it can be seen that the difference in curvature Δ604 at path point 604 has been reduced in the final path 800 (corresponding path point 804) at the expense of e.g. increasing the curvature Δ803 of path point 803. Still the overall curvature of the path 800 is reduced in comparison to the initially recorded path 400.

According to examples of the disclosure a further step may be performed in the curvature reduction process. Although the path points may be arranged to be moved mostly in a transversal direction during curvature reduction, this may not always be the case, and it is also possible that the first drivable machine path may comprise path points that are unevenly distributed along the path. That is, the inter-path point distance along the path may be varying. In some instances it may be desirable that the path points, instead, are evenly distributed along the path. This may be the case, for example, if the machine control system is designed to require the path points to be evenly spaced in the autonomous navigation. Optionally, therefore, the illustrated method may comprise a step where the path points of the otherwise "final" navigable machine path are re-determined such that this inter-path point distance requirement becomes fulfilled.

This may be performed in various ways, where e.g., any suitable interpolation method may be utilised. For example, the path points 801-814 of path 800 may be subjected to interpolation where a series of smooth curves, e.g. a piece-wise spline, for example consisting of a series of continuous circular arcs and lines that join smoothly and that intersect the path points, or at most differs from the path points of path 800 by a small tolerance in distance (e.g. 0.001m - 0.01m).

As is known to the person skilled in the art, in principle, any smooth non-polyline curve that can be fitted through the path points of path 800 may be utilised in the interpolation. Furthermore, it may be ensured in the interpolation that curvature is not changed any further, and that the interpolated curve is still within the navigable area. Interpolation of this kind is well known to the person skilled in the art.

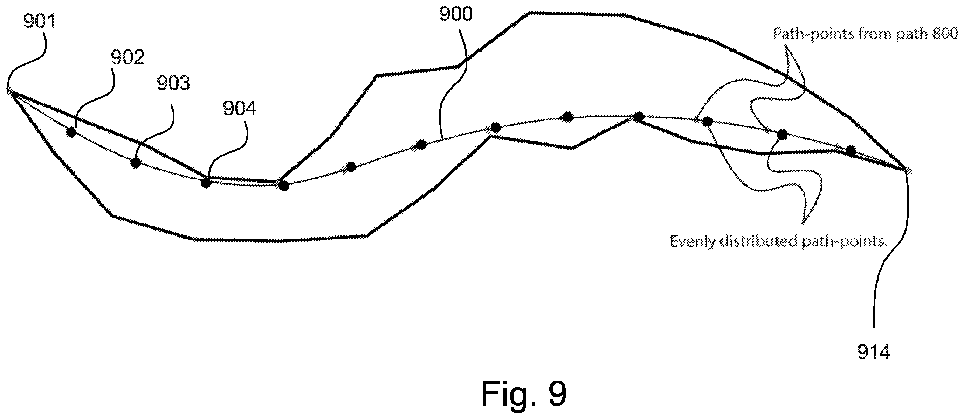

An exemplary interpolation curve based on the path point of path 800 in Fig. 8 is indicated by 900 in Fig. 9. This interpolated curve may then be sampled at uniform intervals to obtain a new path which has points at essentially the same distance between each other and that still lie within the navigable area. These path points, illustrated by path pints 901-914 in Fig. 9, are then selected as the navigable path to be used in the autonomous navigation by the machine.

When it is determined in step 505 that the curvature reduction is completed, the resulting path points from the reduction process is selected as the navigable machine path in step 506, and in step 507 the navigable machine path is returned to step 304 in Fig. 3. The navigable path that has been generated is then provided, e.g., stored, in step 305, in the control system of the machine 100, and finally the machine is set to autonomously navigate (drive) the route from the location A to the location B following the generated navigable machine path, where the machine is set to follow the path defined by the path points of this navigable path, and where continuously distances may be measured to surrounding obstacles to verify that the machine location is actually at the desired location according to the generated path.

As can be seen when comparing the final path 800 in Fig. 8 with machine path 400 travelled during the obtaining of the measured distances, i.e., a manually driven machine path, the navigable path generated according to the present disclosure is considerably smoother, and will thereby allow, e.g., higher average machine speeds while simultaneously subjecting the machine to less wear since e.g. driver caused steering corrections can be eliminated from the machine path generated according to the present disclosure.

In addition to the above, according to embodiments of the disclosure, the generated navigable area, as well as the generated navigable path can be arranged to be displayed to an operator, e.g., on a display. Furthermore, the boundaries of the navigable area, and hence the constraints of the navigable machine path, may be arranged to allow a user-initiated change by the operator. For example, there may exist a desire that the machine is to avoid a further obstacle, or stay further away e.g., from an existing obstacle. There may exist various other reasons that may generate a desire to change the boundaries of the navigable area.

The operator may be presented with a view according to Fig. 8, where the boundaries of the navigable area can be moved to reduce the navigable area. This is exemplified by dashed lines 801. According to embodiments of the disclosure, the navigable machine path may then be arranged to be recalculated as soon as there is a boundary change. This is illustrated by dotted path 802, which illustrates a recalculated path that takes into account the new restrictions. The disclosure hence allows changes, while still being capable of immediately determining a new optimal navigable path without a need for manually driving the route as would be the case according to the prior art as soon as there would be a change in the surroundings of the machine.

User-initiated extensions of the original navigable area, on the other hand, may preferably be prohibited, since this impose the risk that safety distance requirements are violated which in turn may allow a path causing the machine to crash. Extensions of an already limited navigable area may be allowed, but only to the extent that it does not go beyond the original boundaries of the navigable area.

The present disclosure may be utilised for essentially any kind of underground mining machine being used for autonomous operation in an underground environment and is hence not limited to machines of the kind that has been exemplified above. For example, the disclosure is equally valid for non-articulated machines as well as for mining machines carrying work devices.

## Claims

1. A computer-implemented method for routing of an underground mining machine (100) in an underground environment, the machine (100) being configured to be driven from a first location (A) to a second location (B) in the underground environment, the method comprising:
obtaining measured distances (201) to surrounding obstacles (202) from a plurality of positions (401-414) along a route from the first location to the second location (B);
determining a representation of a navigable area (410) based on the obtained distances (201) to surrounding obstacles (202), wherein the navigable area is a tolerance area within which machine repositioning is allowable along the route from the first location (A) to the second location (B);
generating a navigable machine path (800; 802) from the first location (A) to the second location (B), the navigable machine path (800; 802) comprising a plurality of consecutive path points constrained to the navigable area and being generated by applying a curvature reducing algorithm on adjacent path points of the plurality of consecutive path points; wherein generating of the navigable machine path (800; 802) by the curvature reducing algorithm comprises:
- calculating the plurality of consecutive path points (601-614) representing the shortest path from the first location (A) to the second location (B); and
- reducing curvature of adjacent consecutive path points, wherein curvature is defined as a change in direction that occurs between line segments connecting consecutive path points, and wherein the curvature of adjacent consecutive path points is reduced by adjusting the position of one or more of the adjacent path points, the adjusting being constrained by the navigable area (410) and
routing the machine (100) in accordance with the navigable machine path (800; 802) during autonomous driving from the first location to the second location (B).

2. Method according to claim 1, wherein, for each of the plurality of positions (401-414), the measured distances (201) are obtained for a plurality of directions toward surrounding obstacles (202).

3. Method according to any of claims 1 or 2, further comprising:
obtaining machine (100) information; and
determining the representation of the navigable area (410) such that when a predetermined position on a longitudinal axis of the machine (100) is confined to said navigable area (410), the machine (100) is confined to the navigable area (410) during autonomous driving from the first location (A) to the second location (B).

4. Method according to any one of the claims 1-3, further comprising:
determining at least one safety distance to the surrounding obstacles when determining the representation of the navigable area (410).

5. Method according to claim 4, wherein the determined safety distance is a distance in the interval 0.1-2 meters.

6. Method according to any one of the claims 3-5, further comprising:
displaying the navigable machine path (800; 802) in the representation of the navigable area (410),
receiving a user-initiated change of the navigable area (410), wherein the user-initiated change of the navigable area (410) is restricted by the safety distance to surrounding obstacles (202) along the route, and
recalculating the navigable path based on the user-initiated change of the navigable path.

7. Computer program comprising instructions which, when the program is executed by a computer, cause the computer to carry out the method according to any one of the claims 1-6.

8. Computer-readable medium comprising instructions which, when executed by a computer, cause the computer to carry out the method according to any one of the claims 1-6.

9. A system for routing of an underground mining machine (100) in an underground environment, the machine (100) being configured to be driven from a first location (A) to a second location (B) in the underground environment, the system comprising processing circuitry configured to:
obtain measured distances (201) to surrounding obstacles (202) from a plurality of positions (401-414) along a route from the first location (A) to the second location (B);
determine a representation of a navigable area (410) based on the obtained distances (201) to surrounding obstacles (202), wherein the navigable area is a tolerance area within which machine repositioning is allowable along the route from the first location (A) to the second location (B);
generate a navigable machine path (800; 802) from the first location (A) to the second location (B), the navigable machine path (800; 802) comprising a plurality of consecutive path points constrained to the navigable area (410) and being generated by applying a curvature reducing algorithm on adjacent path points of the plurality of consecutive path points, wherein generating of the navigable machine path (800; 802) by the curvature reducing algorithm comprises:
- calculating the plurality of consecutive path points (601-614) representing the shortest path from the first location (A) to the second location (B); and
- reducing curvature of adjacent consecutive path points, wherein curvature is defined as a change in direction that occurs between line segments connecting consecutive path points, and wherein the curvature of adjacent consecutive path points is reduced by adjusting the position of one or more of the adjacent path points, the adjusting being constrained by the navigable area (410); and
route the machine (100) in accordance with the navigable machine path (800; 802) during autonomous driving from the first location (A) to the second location (B).

## Patentansprüche

1. Computerimplementiertes Verfahren zur Streckenführung einer Untertage-Bergbaumaschine (100) in einer Untertage-Umgebung, wobei die Maschine (100) konfiguriert ist, um von einem ersten Standort (A) zu einem zweiten Standort (B) in der Untertage-Umgebung gefahren zu werden, wobei das Verfahren Folgendes umfasst:
Erhalten von gemessenen Abständen (201) zu umgebenden Hindernissen (202) von einer Vielzahl von Positionen (401-414) entlang einer Strecke von dem ersten Standort zu dem zweiten Standort (B);
Bestimmen einer Darstellung eines navigierbaren Bereichs (410) basierend auf den erhaltenen Abständen (201) zu umgebenden Hindernissen (202), wobei der navigierbare Bereich ein Toleranzbereich ist, innerhalb dessen eine Maschinenrepositionierung entlang der Strecke von dem ersten Standort (A) zu dem zweiten Standort (B) erlaubt ist;
Erzeugen eines navigierbaren Maschinenpfads (800; 802) von dem ersten Standort (A) zu dem zweiten Standort (B), wobei der navigierbare Maschinenpfad (800; 802) eine Vielzahl von aufeinanderfolgenden Pfadpunkten umfasst, die auf den navigierbaren Bereich beschränkt sind, und durch Anwenden eines Krümmungsreduzierungsalgorithmus auf angrenzende Pfadpunkte der Vielzahl von aufeinanderfolgenden Pfadpunkten erzeugt wird; wobei Erzeugen des navigierbaren Maschinenpfads (800; 802) durch den Krümmungsreduzierungsalgorithmus Folgendes umfasst:
- Berechnen der Vielzahl von aufeinanderfolgenden Pfadpunkten (601-614), die den kürzesten Pfad von dem ersten Standort (A) zu dem zweiten Standort (B) darstellen; und
- Reduzieren der Krümmung von angrenzenden, aufeinanderfolgenden Pfadpunkten, wobei die Krümmung als eine Änderung der Richtung definiert ist, die zwischen Liniensegmenten auftritt, die aufeinanderfolgende Pfadpunkte verbinden, und wobei die Krümmung von angrenzenden, aufeinanderfolgenden Pfadpunkten reduziert wird durch Anpassen der Position von einem oder mehreren der angrenzenden Pfadpunkte, wobei Anpassen durch den navigierbaren Bereich (410) beschränkt ist, und
Streckenführen der Maschine (100) in Übereinstimmung mit dem navigierbaren Maschinenpfad (800; 802) während des autonomen Fahrens von dem ersten Standort zu dem zweiten Standort (B).

2. Verfahren nach Anspruch 1, wobei, für jede der Vielzahl von Positionen (401-414), die gemessenen Abstände (201) für eine Vielzahl von Richtungen in Richtung umgebender Hindernisse (202) erhalten werden.

3. Verfahren nach einem der Ansprüche 1 oder 2, weiter umfassend:
Erhalten von Maschinen- (100) -Informationen; und
Bestimmen der Darstellung des navigierbaren Bereichs (410), so dass, wenn eine vorbestimmte Position auf einer longitudinalen Achse der Maschine (100) auf den navigierbaren Bereich (410) beschränkt ist, die Maschine (100) während des autonomen Fahrens von dem ersten Standort (A) zu dem zweiten Standort (B) auf den navigierbaren Bereich (410) beschränkt ist.

4. Verfahren nach einem der Ansprüche 1-3, weiter umfassend:
Bestimmen mindestens eines Sicherheitsabstands zu den umgebenden Hindernissen, wenn die Darstellung des navigierbaren Bereichs (410) bestimmt wird.

5. Verfahren nach Anspruch 4, wobei der bestimmte Sicherheitsabstand ein Abstand im Intervall 0,1-2 Meter ist.

6. Verfahren nach einem der Ansprüche 3-5, weiter umfassend:
Anzeigen des navigierbaren Maschinenpfads (800; 802) in der Darstellung des navigierbaren Bereichs (410),
Empfangen einer vom Benutzer initiierten Änderung des navigierbaren Bereichs (410), wobei die vom Benutzer initiierte Änderung des navigierbaren Bereichs (410) durch den Sicherheitsabstand zu umgebenden Hindernissen (202) entlang der Strecke begrenzt ist, und
Neuberechnen des navigierbaren Pfads basierend auf der vom Benutzer initiierten Änderung des navigierbaren Pfads.

7. Computerprogramm, umfassend Anweisungen, die, wenn das Programm von einem Computer ausgeführt wird, den Computer veranlassen, das Verfahren nach einem der Ansprüche 1-6 auszuführen.

8. Computerlesbares Medium, umfassend Anweisungen, die, wenn sie von einem Computer ausgeführt werden, den Computer veranlassen, das Verfahren nach einem der Ansprüche 1-6 auszuführen.

9. System zur Streckenführung einer Untertage-Bergbaumaschine (100) in einer Untertage-Umgebung, wobei die Maschine (100) konfiguriert ist, um von einem ersten Standort (A) zu einem zweiten Standort (B) in der Untertage-Umgebung gefahren zu werden, wobei das System eine Verarbeitungsschaltung umfasst, die zu Folgendem konfiguriert ist:
Erhalten gemessener Abstände (201) zu umgebenden Hindernissen (202) von einer Vielzahl von Positionen (401-414) entlang einer Strecke von dem ersten Standort (A) zu dem zweiten Standort (B);
Bestimmen einer Darstellung eines navigierbaren Bereichs (410) basierend auf den erhaltenen Abständen (201) zu umgebenden Hindernissen (202), wobei der navigierbare Bereich ein Toleranzbereich ist, innerhalb dessen eine Maschinenrepositionierung entlang der Strecke von dem ersten Standort (A) zu dem zweiten Standort (B) erlaubt ist;
Erzeugen eines navigierbaren Maschinenpfads (800; 802) von dem ersten Standort (A) zu dem zweiten Standort (B), wobei der navigierbare Maschinenpfad (800; 802) eine Vielzahl von aufeinanderfolgenden Pfadpunkten umfasst, die auf den navigierbaren Bereich (410) beschränkt sind, und durch Anwenden eines Krümmungsreduzierungsalgorithmus auf angrenzende Pfadpunkte der Vielzahl von aufeinanderfolgenden Pfadpunkten erzeugt wird, wobei Erzeugen des navigierbaren Maschinenpfads (800; 802) durch den Krümmungsreduzierungsalgorithmus Folgendes umfasst:
- Berechnen der Vielzahl von aufeinanderfolgenden Pfadpunkten (601-614), die den kürzesten Pfad von dem ersten Standort (A) zu dem zweiten Standort (B) darstellen; und
- Reduzieren der Krümmung von angrenzenden, aufeinanderfolgenden Pfadpunkten, wobei die Krümmung als eine Änderung der Richtung definiert ist, die zwischen Liniensegmenten auftritt, die aufeinanderfolgende Pfadpunkte verbinden, und wobei die Krümmung von angrenzenden, aufeinanderfolgenden Pfadpunkten durch Anpassen der Position von einem oder mehreren der angrenzenden Pfadpunkte reduziert wird, wobei Anpassen durch den navigierbaren Bereich (410) beschränkt ist; und
Streckenführen der Maschine (100) in Übereinstimmung mit dem navigierbaren Maschinenpfad (800; 802) während des autonomen Fahrens von dem ersten Standort (A) zu dem zweiten Standort (B).

## Revendications

1. Procédé mis en œuvre par ordinateur pour l'acheminement d'une machine (100) d'exploitation minière souterraine dans un environnement souterrain, la machine (100) étant configurée pour être conduite d'un premier lieu (A) à un second lieu (B) dans l'environnement souterrain, le procédé comprenant :
l'obtention de distances (201) mesurées à des obstacles environnants (202) à partir d'une pluralité de positions (401-414) le long d'un itinéraire du premier lieu (A) au second lieu (B) ;
la détermination d'une représentation d'une zone navigable (410) sur la base des distances (201) obtenues à des obstacles environnants (202), dans lequel la zone navigable est une zone de tolérance à l'intérieur de laquelle un repositionnement de la machine est admissible le long de l'itinéraire du premier lieu (A) au second lieu (B) ;
la génération d'un chemin de machine navigable (800 ; 802) du premier lieu (A) au second lieu (B), le chemin de machine navigable (800 ; 802) comprenant une pluralité de points de chemin consécutifs limités à la zone navigable et étant généré en appliquant un algorithme de réduction de courbure sur des points de chemin adjacents de la pluralité de points de chemin consécutifs ;
dans lequel la génération du chemin de machine navigable (800 ; 802) par l'algorithme de réduction de courbure comprend :
- le calcul de la pluralité de points de chemin consécutifs (601-614) représentant le chemin le plus court du premier lieu (A) au second lieu (B) ; et
- la réduction de courbure de points de chemin consécutifs adjacents, dans lequel la courbure est définie comme un changement de direction qui se produit entre des segments de ligne reliant des points de chemin consécutifs, et dans lequel la courbure de points de chemin consécutifs adjacents est réduite en ajustant la position d'un ou de plusieurs des points de chemin adjacents, l'ajustement étant limité par la zone navigable (410) et
l'acheminement de la machine (100) conformément au chemin de machine navigable (800 ; 802) pendant une conduite autonome du premier lieu (A) au second lieu (B).

2. Procédé selon la revendication 1, dans lequel, pour chacune de la pluralité de positions (401-414), les distances (201) mesurées sont obtenues pour une pluralité de directions vers des obstacles environnants (202).

3. Procédé selon l'une quelconque des revendications 1 ou 2, comprenant en outre :
l'obtention d'informations sur la machine (100) ; et
la détermination de la représentation de la zone navigable (410) de sorte que, lorsqu'une position prédéterminée sur un axe longitudinal de la machine (100) est confinée à ladite zone navigable (410), la machine (100) soit confinée à la zone navigable (410) pendant une conduite autonome du premier lieu (A) au second lieu (B).

4. Procédé selon l'une quelconque des revendications 1 à 3, comprenant en outre :
la détermination d'au moins une distance de sécurité aux obstacles environnants lors de la détermination de la représentation de la zone navigable (410).

5. Procédé selon la revendication 4, dans lequel la distance de sécurité déterminée est une distance comprise dans l'intervalle allant de 0,1 m à 2 m.

6. Procédé selon l'une quelconque des revendications 3 à 5, comprenant en outre :
l'affichage du chemin de machine navigable (800 ; 802) dans la représentation de la zone navigable (410),
la réception d'un changement de la zone navigable (410) initié par l'utilisateur, dans lequel le changement de la zone navigable (410) initié par l'utilisateur est restreint par la distance de sécurité à des obstacles environnants (202) le long de l'itinéraire, et
le recalcul du chemin navigable sur la base du changement du chemin navigable initié par l'utilisateur.

7. Programme d'ordinateur comprenant des instructions qui, lorsque le programme est exécuté par un ordinateur, amènent l'ordinateur à réaliser le procédé selon l'une quelconque des revendications 1 à 6.

8. Support lisible par ordinateur comprenant des instructions qui, lorsqu'exécutées par un ordinateur, amènent l'ordinateur à réaliser le procédé selon l'une quelconque des revendications 1 à 6.

9. Système pour l'acheminement d'une machine (100) d'exploitation minière souterraine dans un environnement souterrain, la machine (100) étant configurée pour être conduite d'un premier lieu (A) à un second lieu (B) dans l'environnement souterrain, le système comprenant une circuiterie de traitement configurée pour :
obtenir des distances (201) mesurées à des obstacles environnants (202) à partir d'une pluralité de positions (401-414) le long d'un itinéraire du premier lieu (A) au second lieu (B) ;
déterminer une représentation d'une zone navigable (410) sur la base des distances (201) obtenues à des obstacles environnants (202), dans lequel la zone navigable est une zone de tolérance à l'intérieur de laquelle un repositionnement de la machine est admissible le long de l'itinéraire du premier lieu (A) au second lieu (B) ;
générer un chemin de machine navigable (800 ; 802) du premier lieu (A) au second lieu (B), le chemin de machine navigable (800 ; 802) comprenant une pluralité de points de chemin consécutifs limités à la zone navigable (410) et étant généré en appliquant un algorithme de réduction de courbure sur des points de chemin adjacents de la pluralité de points de chemin consécutifs, dans lequel la génération du chemin de machine navigable (800 ; 802) par l'algorithme de réduction de courbure comprend :
- le calcul de la pluralité de points de chemin consécutifs (601-614) représentant le chemin le plus court du premier lieu (A) au second lieu (B) ; et
- la réduction de courbure de points de chemin consécutifs adjacents, dans lequel la courbure est définie comme un changement de direction qui se produit entre des segments de ligne reliant des points de chemin consécutifs, et dans lequel la courbure de points de chemin consécutifs adjacents est réduite en ajustant la position d'un ou de plusieurs des points de chemin adjacents, l'ajustement étant limité par la zone navigable (410) ; et
acheminer la machine (100) conformément au chemin de machine navigable (800 ; 802) pendant une conduite autonome du premier lieu (A) au second lieu (B).
